(19) Europäisches Patentamt

European Patent Office

Office européen des brevets

(11) **EP 1 729 118 A1**

(12) **DEMANDE DE BREVET EUROPEEN**

(43) Date de publication:
06.12.2006 Bulletin 2006/49

(51) Int Cl.:
*G01N 25/54* (2006.01)

(21) Numéro de dépôt: **06290851.2**

(22) Date de dépôt: **24.05.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **31.05.2005 FR 0551425**

(71) Demandeur: **L'AIR LIQUIDE, SOCIETE ANONYME POUR L'ETUDE ET L'EXPLOITATION DES PROCEDES GEORGES CLAUDE
75007 Paris (FR)**

(72) Inventeurs:
• **Claeys, Christophe**
  **91470 Limours (FR)**
• **De Francesco, Errico**
  **Newark, DE 19713 (US)**
• **Naudet, Valérie**
  **92370 Chaville (FR)**

(74) Mandataire: **Ducreux, Marie**
  **L'Air Liquide S.A.,**
  **Direction de la Propriété Intellectuelle,**
  **75 Quai d'Orsay**
  **75321 Paris Cedex 07 (FR)**

(54) **Procédé de contrôle des risques d'explosion d'un système gazeux.**

(57) La présente invention concerne un procédé de contrôle des risques d'explosion d'un système gazeux combustibleloxygènelinerte selon lequel :
- on détermine la composition du système gazeux,
- on définit à l'aide d'une l'équation spécifique, la température maximale, appelée Tcalculée, pouvant être atteinte dans ledit système combustibletoxygènefinerte en restant en dehors de la zone inflammable dudit système combustibte/oxygène/inerte,
- on détermine alors la température seuil Ts ne devant pas être dépassée qui correspond à 90 % de Tcalculée, de préférence 85 % de Tcalculée et plus préférentiellement encore 80 % de Tcalculée.

EP 1 729 118 A1

Printed by Jouve, 75001 PARIS (FR)

## Description

L'invention concerne un procédé de contrôle des risques d'explosion d'un système gazeux combustible(s)/ oxygène/inerte.

La sécurité des sites et des procédés industriels s'avérant être une préoccupation toujours plus présente, notamment dans les industries mettant en oeuvre des produits inflammables, des procédures sécurisées sont mises en place dans la plupart des sites industriels. En termes de sécurité des procédés dans l'industrie chimique, la connaissance des limites inférieures d'inflammabilité des composés est de première importance. Dans la présente demande, on entend par « limite inférieure d'inflammabilité (LII) d'un composé donné » le pourcentage minimal de ce composé dans l'air à une température donnée, pourcentage au-delà duquel le composé s'enflamme. Elle est exprimée en pourcentage molaire ou en pourcentage volumique. Les limites inférieures d'inflammabilité ne sont pas disponibles pour plusieurs centaines de composés, bien que ces composés soient connus pour être combustibles. Par ailleurs, les limites inférieures d'inflammabilité données dans la littérature ne sont pas toutes très fiables. Jusqu'à ce jour ces limites inférieures d'inflammabilité ont été estimées selon différentes méthodes qui peuvent être classées en plusieurs catégories : équations empiriques, température critique de flamme et méthodes structurales de contribution de groupe. Des équations empiriques ont été développées par Albahri, T.A. dans "Flammability Characteristics of Pure Hydrocarbons", Chemical Engineering Science, vol. 58, pp. 3629-3641 (2003), Suzuki, T., "Empirical Relationship between Lower Flammability Limits and Standard Enthalpies of Combustion of Organic Compounds", Fire and Materials, vol. 18, pp. 333-336 (1994) , Hshieh, F.-Y., "Predicting Heat of Combustion and Lower Flammability Limits of Organosilicon Compounds", Fire and Materials, vol. 23, pp. 79-89 (1999), Hshieh, F.-Y., Hirsch, D.B., Beeson, H.D., "Using Heat of Combustion Data to Estimate or Asses some Threshold Flammability Properties of Materials", Fire and Materials, vol. 27, pp. 267-273 (2003) , Dalmazzone, D., Laforest, J.C., Petit, J.M., "Application of Thermochemical Energy Hazard Criteria to the Prediction of Lower Flammability Limits of Hydrocarbons in Air", Oil & Gas Science and Technology, Vol. 56, No. 4, pp. 365-372, (2001) et Kondo, S., Urano, Y., Tokuhashi, K., Takahashi, A., Tanaka, K., "Prediction of Flammability of Gases by Using F-number Analysis", Journal of Hazardous Materials, vol. A82, pp. 113-128 (2001). Les différentes équations ont été établies dans l'air et à la pression atmosphérique, elles ne sont pas toujours très fiables, et certaines d'entre elles peuvent s'avérer très fastidieuses à utiliser. Ces diverses méthodes de détermination de la LII ont échoué partiellement probablement parce que la question de la fiabilité des données de la littérature n'a pas été abordée, et que, de ce fait, des données incorrectes ont été incluses dans les bases de valeurs utilisées pour l'établissement des équations ou outils de calcul des limites.

Plusieurs autres tentatives d'évaluation des limites inférieures d'inflammabilité ont également été réalisées mais les estimations ne sont fiables que pour un nombre limité d'espèces chimiques, donc de fonctions chimiques et les méthodes de calcul ne sont utilisables qu'à la température ambiante. Ainsi, Egerton, A.C., 4th Symposium on Combustion, p. 4, (1953) et Zabetakis, M.G., Lambiris, S., Scott, G.S., "Flame Temperatures of Limit Mixtures", 7th International Symposium on Combustion, pp. 484-487 (1959) a développé une méthode utilisant la température adiabatique. Cependant, cette méthode nécessite l'utilisation d'un code pour le calcul de la température adiabatique de flamme. Albahri a développé une méthode basée sur la structure moléculaire, cependant, cette méthode s'applique uniquement aux hydrocarbures.

Des méthodes de contrôle du risque d'explosion dans des procédés industriels ont été décrites dans US 2004/0228786 et US 6,258,978. US2004/0228786 propose un système de gestion des risques d'explosion à l'entrée d'un réacteur de purification par la régulation de la température de préchauffage des effluents. Cependant la manière de fixer la valeur de la température de régulation du préchauffage n'est pas décrite, aucun détail n'est donné sur la méthode de définition de cette température cible (mathématique, expérimentale), ni sur les outils nécessaires pour l'appliquer.

US 6,258,978 propose le contrôle d'un procédé de production d'acétate de vinyle en maintenant la teneur en oxygène à la sortie du réacteur de conversion en dessous de la teneur limite en oxygène, cependant l'application de ce brevet se limite à l'acétate de vinyle.

Il existe donc un réel besoin en un procédé de contrôle des risques d'explosion de systèmes gazeux combustible (s)loxygène/inerte qui soit simple, fiable, utilisable avec des températures variables et qui soit adapté à un grand nombre de combustibles.

Par système gazeux combustible(s)/oxygène/inerte, on entend un mélange gazeux de ces différents composés.

Dans ce but, la présente invention concerne un procédé de contrôle des risques d'explosion d'un système gazeux combustibleloxygène/inerte selon lequel :

- on détermine la composition du système gazeux,
- on définit à l'aide de l'équation (1) donnée ci-dessous, la température maximale, appelée Tcalculée, pouvant être atteinte dans ledit système combustible/oxygène/inerte en restant en dehors de la zone inflammable dudit système combustible/oxygène/inerte :

$$\mathrm{LII}\,(\mathrm{mol}\,\%) \;=\; 519{,}957 \;\times\; S^{+\,0{,}70936} \;\times\; n^{-0{,}197} \;\times\; T^{-\,051536} \quad \textbf{(1)}$$

où :

- LII correspond à la composition en pourcentage molaire du combustible dans le système combustible/oxygène/inerte,
- n est le nombre d'atomes de carbone dans la molécule de combustible,
- T est la température maximale pouvant être atteinte (ou Tcalculée), exprimée en K,
- S est la fraction du combustible dans le mélange stoechiométrique combustible/air, le mélange stoechiométrique étant défini de la manière suivante :

$$C_x H_y O_z N_{w\,(g)} + \left(x + \frac{y}{4} - \frac{z}{2}\right) O_{2\,(g)} \;\rightarrow\; xCO_{2\,(g)} \;+\; \frac{y}{2} H_2 O_{(g)} + \frac{w}{2} N_{2\,(g)}$$

et

$$S \;=\; \frac{1}{1 + 5x + \frac{5}{4}y - \frac{5}{2}z}$$

- on détermine alors la température seuil Ts ne devant pas être dépassée qui correspond à 90 % de Tcalculée, de préférence 85 % de Tcalculée et plus préférentiellement encore 80 % de Tcalculée.

La mise au point de l'équation (1) permet en effet de répondre à l'objectif fixé par la présente invention. Sur la base d'un mélange combustible/oxygène/inerte, il suffit de connaître la composition du mélange gazeux pour déterminer la température maximale (Tcalculée) au-delà de laquelle le combustible présent dans le mélange risque de s'enflammer. Bien entendu, pour minimiser les risques et gérer au mieux la sécurité, une température, dite température seuil Ts, inférieure à cette Tcalculée est utilisée dans le système. Selon un mode de réalisation avantageux, la température du système est fixée à une valeur égale à 90 % de Tcalculée, de préférence 85% de Tcalculée et plus préférentiellement encore 80 % de Tcalculée.

L'invention peut être appliquée à des combustibles choisis parmi les composés organiques présentant uniquement des atomes d'hydrogène et de carbone et les composés organiques présentant outre les atomes d'hydrogène et de carbone, des atomes d'oxygène et/ou d'azote. Ainsi, elle concerne un grand nombre de composés organiques contenant les atomes C, H, O et N, organisés en une gamme importante de fonctions chimiques différentes. A titre d'exemples on peut citer, les alcanes, alcènes, alcynes, acides, cétones, aldéhydes, alcools, carboxyles, éther, amines, amides.

Ce procédé peut être utilisé à la pression atmosphérique, pour une large plage de températures, allant de 20°C à la température d'autoinflammation (TAI) du combustible, de préférence de 20°C à 400°C.

Dans le procédé conforme à l'invention, le système combustible(s)/oxygènelinerte comprend généralement une concentration en combustible(s) de 0,5 à 10 %, de préférence de 1 à 8 %, et plus préférentiellement encore, de l'ordre de 5 %, lesdits pourcentages étant des pourcentages volumiques.

Le combustible peut être un produit unique ou un mélange de plusieurs produits combustibles. Dans le cas d'un mélange, on considère que seuls les produits présents à une concentration supérieure à 0,5 % ont une influence sur la valeur de Tcalculée. Dans le cas d'un mélange de combustible(s), on calcule pour chacun des constituants du mélange présents en quantité suffisante, la Tcalculée ; ensuite, la Tcalculée utilisée pour déterminer la température maximale du système sera la plus petite de ces valeurs.

Ce procédé peut s'appliquer lors des phases transitoires d'un procédé industriel mettant en oeuvre des systèmes combustiblesloxygène/inerte. Selon un mode de réalisation avantageux, le procédé est un procédé d'oxydation ou un procédé de traitement d'effluents gazeux en aval d'un ou plusieurs procédés industriels et en amont d'un système d'incinération d'effluents gazeux, commun à l'ensemble des procédés amonts. Selon un mode de réalisation avantageux, le procédé de l'invention comprend :

a) le préchauffage d'effluents gazeux,

b) la mesure de la composition de ces effluents gazeux,

c) la mesure de la température de préchauffage T,

d) le calcul à l'aide de l'équation (1) ci-dessus de la température maximale au-delà de laquelle les effluents risquent de s'enflammer, température dite Tcalculée,

e) la détermination de la température seuil Ts égale à 90 % de Tcalculée, de préférence 85 % de Tcalculée et plus préférentiellement encore de 80 % de T calculée,

f) le calcul Ts-T,

si Ts-T est égal à 0 ou négatif, alors la température de préchauffage est abaissée à une valeur inférieure à Ts,

les étapes a), b) et c) pouvant être réalisées dans un ordre quelconque. Selon un mode de réalisation avantageux, le procédé est continu. La détermination de la composition du mélange d'effluents gazeux est habituellement faite de façon régulière, toutes les 15 minutes, de préférence toutes les 10 minutes et plus préférentiellement encore toutes les 5 minutes. La détermination de cette composition est généralement réalisée à l'aide de moyens classiquement utilisés par l'homme du métier, notamment par chromatographie gazeuse. La mesure de la température de préchauffage peut être faite dans les mêmes intervalles de temps, voire en continue.

Le préchauffage peut être externe ou obtenu par un flux sortant chaud recyclé vers les effluents gazeux. La régulation du préchauffage en fonction de la valeur de Ts peut se faire par régulation du préchauffage externe ou par ajustement du débit recyclé pour atteindre une température d'équilibre adaptée,

Selon un autre mode de réalisation le procédé conforme à l'invention, comprend une étape d'oxydation après l'étape de préchauffage et une partie du flux sortant est recyclée vers l'étape de préchauffage.

Lorsqu'il apparaît que Ts-T est égal à 0 ou est négatif, la température de préchauffage doit être abaissée. Dans le procédé selon l'invention, on peut prévoir des moyens permettant de modifier en conséquence et automatiquement la température de préchauffage. On peut aussi prévoir un signal visuel et/ou sonore qui est émis pour attirer l'attention de l'opérateur et l'inciter à modifier la température de préchauffage.

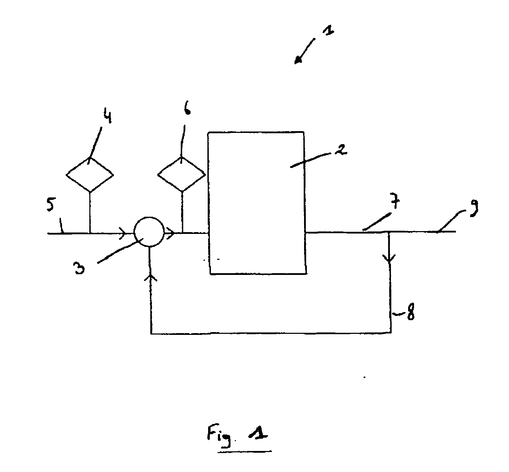

La figure 1 représente schématiquement un dispositif 1 permettant la mise en oeuvre du procédé conforme à l'invention. Ce dispositif comprend un réacteur d'oxydation ou de traitement d'effluents gazeux 2, un dispositif de préchauffage 3, un dispositif d'analyse 4 des effluents entrant 5 et un capteur de température 6. Les effluents gazeux 5 issus d'une autre zone réactive de l'installation, sont amenés dans la section d'oxydation ou de traitement des effluents de l'usine. La composition de ces effluents gazeux est analysée en continu par le dispositif d'analyse 4 puis ils sont préchauffés en 3 à une température déterminée par le capteur 6 avant d'être traités dans le réacteur 2. Les gaz oxydés sortant 7 sont séparés en deux fractions , les gaz qui n'ont pas subi une conversion complète 8 sont recyclés 8 vers la zone de préchauffage, les gaz ayant été totalement convertis 9 sont récupérés ou rejetés. Le dispositif d'analyse 4 est relié à un calculateur qui détermine pour chaque composition donnée la température maximale possible à laquelle cette composition peut être portée sans risque d'explosion. Cette température est diminuée d'un facteur correctif déterminé pour satisfaire les normes de sécurité de l'installation, on détermine ainsi une température seuil Ts qui ne doit pas être dépassée. Cette température seuil Ts est comparée à la température T mesurée en 6 et si T est supérieure ou égale à Ts, un signal est immédiatement émis de telle sorte que la température de préchauffage soit abaissée.

L'invention permet donc, grâce à une équation unique, simple à utiliser, de déterminer la température à laquelle un système gazeux peut être conservé ou peut être préchauffé tout en limitant au maximum les risques d'explosion.

## EXEMPLES

Deux exemples d'application sont donnés ci-dessous et concement les procédés de synthèse suivants :

- l'acrylonitrile
- l'anhydride maléique.

## Exemple 1 : utilisation de la méthode de détermination de la température de régulation pour le procédé de synthèse de l'acrylonitrile.

La production de l'acrylonitrile se fait ici par ammoxydation du propylène. Le procédé se décompose en deux étapes principales :

- l'ammoxydation du propylène,
- la séparation de l'acrylonitrile du flux sortant du réacteur de conversion au moyen d'une colonne d'absorption. Les effluents sortant de la colonne sont ensuite incinérés.

La réaction d'ammoxydation est la suivante :

$$2\ C_3H_6 + 2\ NH_3 + 3\ O_2 \rightarrow 2\ CH_2CHCN + 6\ H_2O$$

Les compositions à l'entrée du réacteur de conversion du propylène et à la sortie de la colonne d'absorption sont résumées dans le tableau 1 ci-dessous.

Tableau 1

| Composé | % vol. à l'entrée du réacteur | % vol. des effluents gazeux à incinérer |
|---|---|---|
| propylène | **8,2** | **0,7** |
| propane | 0,2 | 0,3 |
| $NH_3$ | 8,2 | - |
| $O_2$ | 17,6 | 4,3 |
| $N_2$ | 65,8 | 91 |
| acrylonitrile | | - |
| acetonitrile | | - |
| HCN | | - |
| CO | | **0,8** |
| $CO_2$ | | 2,9 |
| total | 100 | 100 |

La composition des effluents gazeux montre que le risque d'inflammabilité dépend du niveau des concentrations en espèces inflammables majoritaires, c'est-à-dire le propylène et le monoxyde de carbone (CO). Ce dernier étant présent en quantité nettement inférieure à sa limite inférieure d'inflammabilité, le risque d'explosion se contrôle donc sur la base de la teneur en propylène.

Le tableau 2 donne, pour le propylène, la comparaison entre la composition de l'effluent à traiter et les limites inférieures d'inflammabilité (LII) calculées à température ambiante et à 400°C. La valeur donnée à 400°C est calculée à partir de l'équation (1) de l'invention.

Tableau 2

| LII (% vol.) à 20°C (littérature) | LII (% vol.) à 20°C (équation 1) | LII (% vol.) à 400°C (équation 1) | % vol. combustible dans le mélange à traiter | TAI* (°C) dans l'air/ dans $O_2$ |
|---|---|---|---|---|
| 2,4 | 2,5 | 1,6 | 0,7 | 460/420 |
| *TAI: température d'autoinflammation au-dessus de laquelle le système combustible/comburant/inerte s'allume spontanément sans apport d'énergie extérieure. | | | | |

L'exemple montre que, dans ce cas précis, ce n'est pas la limite inférieure d'inflammabilité (LII) qui fixe la température de régulation du préchauffage mais la température d'autoinflammation (TAI) de chacun des composés. En effet, même en considérant une température de 400°C, la limite inférieure d'inflammabilité du propylène, composé le plus inflammable compte-tenu de sa proportion, est de 1,6 % vol., ce qui reste au-dessus de la teneur du mélange dans ce composé, laquelle est de 0,7 % vol.. C'est ainsi la température d'autoinflammation (TAI) (valeur minimale de 420°C dans l'oxygène) qui fixera la température en amont de l'incinérateur. L'application de la méthode permet d'éliminer le risque d'inflammabilité étant donné la teneur en combustible dans le mélange et met en évidence le besoin de connaître ici la température d'autoinflammation pour fixer la température maximale à laquelle peut être porté le mélange de sortie avant retraitement.

**Exemple 2 : utilisation de la méthode de détermination de la température de régulation pour le procédé de synthèse de l'anhydride maléique.**

Le procédé étudié est celui de l'oxydation catalytique du n-butane.

La réaction principale est la suivante :

$$C_4H_{10} + 3{,}5\ O_2 \rightarrow C_4H_2O_3 + 4\ H_2O$$

Les compositions à l'entrée et à la sortie du réacteur de conversion du n-butane sont résumées dans le tableau 3 ci-dessous.

Tableau 3

| Composé | % vol. à l'entrée du réacteur | % vol. à la sortie du réacteur |
|---|---|---|
| n-butane | **5** | **1,2** |
| i-butane | 0,2 | 0,05 |
| Ar | 0,9 | 0,9 |
| $O_2$ | 19,8 | 4,55 |
| $N_2$ | 74,1 | 73,3 |
| $CO_2$ | | 2,1 |
| CO | | 2,1 |
| $H_2O$ | | 15,8 |
| total | 100 | 100 |

L'effluent gazeux majoritaire présentant un risque d'explosion est le n-butane. A partir de la composition à la sortie de la colonne d'absorption, il est possible de déterminer la température maximale de préchauffage des effluents gazeux avant leur traitement ultérieur.

Le tableau 4 donne, pour le n-butane, la comparaison entre la composition de l'effluent à traiter et les limites inférieures d'inflammabilité (LII) calculées à température ambiante et à 350°C sur la base de l'équation (1). Les résultats montrent que le flux sortant ne doit pas être chauffé à plus de 280°C (en prenant en compte une marge maximale de 80 % de la valeur maximale calculée (350°C)), pour rester en-dessous de la limite inférieure d'inflammabilité.

Tableau 4

| LII (% vol.) à 20°C (littérature) | LII (% vol.) à 20°C (équation) | LII (% vol.) à 200°C (équation) | LII (% vol.) à 350°C (équation) | % vol. n-butane dans le mélange à traiter ultérieurement |
|---|---|---|---|---|
| 1,8 | 1,8 | 1,4 | **1,2** | **1,2** |

**Revendications**

**1.** Procédé de contrôle des risques d'explosion d'un système gazeux combustible/oxygène/inerte selon lequel :

- on détermine la composition du système gazeux,
- on définit à l'aide de l'équation (1) donnée ci- dessous, la température maximale, appelée Tcalculée, pouvant être atteinte dans ledit système combustible/ oxygène/ inerte en restant en dehors de la zone inflammable dudit système combustible/ oxygène/ inerte :

$$\text{LII (mol\%)} \;=\; 519{,}957 \;\times\; S^{+0{,}70936} \;\times\; n^{-0{,}197} \;\times\; T^{-051536} \qquad \textbf{(1)}$$

où:

. LII correspond à la composition en pourcentage molaire du combustible dans le système combustible/oxygène/inerte,

. n est le nombre d'atomes de carbone dans la molécule de combustible,

. T est la température maximale pouvant être atteinte (ou Tcalculée), exprimée en K,

. S est la fraction du combustible dans le mélange stoechiométrique combustible/air, le mélange stoechiométrique étant défini de la manière suivante :

$$C_x H_y O_z N_{w\,(g)} + \left(x + \frac{y}{4} - \frac{z}{2}\right) O_{2\,(g)} \rightarrow xCO_{2\,(g)} + \frac{y}{2} H_2 O_{(g)} + \frac{w}{2} N_{2\,(g)}$$

avec

$$S = \frac{1}{1 + 5x + \frac{5}{4}y - \frac{5}{2}z}$$

- on détermine alors la température seuil Ts ne devant pas être dépassée qui correspond à 90 % de Tcalculée, de préférence 85 % de Tcalculée et plus préférentiellement encore 80 % de Tcalculée.

**2.** Procédé selon la revendication 1, **caractérisé par le fait que** le combustible est choisi parmi les composés organiques présentant uniquement des atomes d'hydrogène et de carbone et les composés organiques présentant outre les atomes d'hydrogène et de carbone, des atomes d'oxygène et/ou d'azote.

**3.** Procédé selon la revendication 1 ou 2, **caractérisé par le fait que** la concentration en combustible(s) est de 0,5 % à 10 %, de préférence de 1 à 8 %, et plus préférentiellement encore de l'ordre de 5 %, lesdits pourcentages étant des pourcentages volumiques.

**4.** Procédé selon l'une quelconque des revendications 1 à 3, **caractérisé par le fait que** le système combustible(s)/oxygène/inerte consiste en des effluents gazeux devant être préchauffés.

**5.** Procédé selon la revendication 4, **caractérisé par le fait qu'**il comprend :

a) le préchauffage d'effluents gazeux,
b) la mesure de la composition de ces effluents gazeux,
c) la mesure de la température de préchauffage T,
d) le calcul à l'aide de l'équation (1) ci-dessus de la température maximale au-delà de laquelle les effluents risquent de s'enflammer, température dite Tcalculée,
e) la détermination de la température seuil Ts égale à 90% de Tcalculée, de préférence 85 % de Tcalculée et plus préférentiellement encore de 80 % de T calculée,
f) le calcul de Ts-T,

si Ts-T est égal à 0 ou négatif alors la température de préchauffage est abaissée à une valeur inférieure à Ts, les étapes a), b) et c) pouvant être réalisées dans un ordre quelconque.

**6.** Procédé selon l'une quelconque des revendications 1 à 5, **caractérisé par le fait qu'**il est continu.

**7.** Procédé selon l'une des revendications 1 à 6, **caractérisé par le fait que** la détermination de la composition du mélange est réalisée de façon régulière, toutes les 15 minutes, de préférence toutes les 10 minutes et plus préférentieelement encore toutes les 5 minutes.

**8.** Procédé selon l'une quelconque des revendications 5 à 7, **caractérisé par le fait qu'**il comprend, après l'étape de préchauffage, une étape d'oxydation ou de traitement d'effluents gazeux et éventuellement une étape de recyclage du flux sortant vers l'étape de préchauffage.

Fig. 1

**EP 1 729 118 A1**

<table>
<tr><td colspan="2"></td><td><strong>Office européen<br>des brevets</strong></td><td colspan="2"><strong>RAPPORT DE RECHERCHE EUROPEENNE</strong></td><td colspan="2">Numéro de la demande<br>EP 06 29 0851</td></tr>
</table>

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (IPC) |
|---|---|---|---|
| A | US 6 346 420 B1 (MIRIC TOMISLAV ET AL)<br>12 février 2002 (2002-02-12)<br>* abrégé *<br>* colonne 3, ligne 24 - colonne 4, ligne 13; figure 1 *<br>----- | 1-8 | INV.<br>G01N25/54 |
| D,A | HSHIEH F-Y, HIRSCH D B, BEESON H D:<br>"Using heat of combustion data to estimate or assess some threshold flammability properties of materials"<br>FIRE AND MATERIALS,<br>vol. 27, no. 6, 2003, pages 267-273,<br>XP002389825<br>* le document en entier *<br>----- | 1-8 | |
| A | EP 1 457 771 A (NISSAN MOTOR CO., LTD)<br>15 septembre 2004 (2004-09-15)<br>* abrégé *<br>* page 3, ligne 5 - page 4, ligne 21; figures 1-4 *<br>----- | 1-8 | |
| A | PATENT ABSTRACTS OF JAPAN<br>vol. 2003, no. 12,<br>5 décembre 2003 (2003-12-05)<br>& JP 2004 293541 A (NISSAN MOTOR CO LTD),<br>21 octobre 2004 (2004-10-21)<br>* abrégé *<br>----- | 1-8 | **DOMAINES TECHNIQUES<br>RECHERCHES (IPC)**<br><br>G01N |
| A | SYAGE J A ET AL: "DYNAMICS OF FLAME PROPAGATION USING LASER-INDUCED SPARK INITIATION: IGNITION ENERGY MEASUREMENTS"<br>JOURNAL OF APPLIED PHYSICS, AMERICAN INSTITUTE OF PHYSICS. NEW YORK, US,<br>vol. 64, no. 3, 1 août 1988 (1988-08-01),<br>pages 1499-1507, XP000022037<br>ISSN: 0021-8979<br>* le document en entier *<br>----- | 1-8 | |

Le présent rapport a été établi pour toutes les revendications

| Lieu de la recherche | Date d'achèvement de la recherche | Examinateur |
|---|---|---|
| La Haye | 11 juillet 2006 | Wulveryck, J-M |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................................................
& : membre de la même famille, document correspondant

EPO FORM 1503 03.82 (P04C02)

**EP 1 729 118 A1**

**ANNEXE AU RAPPORT DE RECHERCHE EUROPEENNE
RELATIF A LA DEMANDE DE BREVET EUROPEEN NO.**

EP 06 29 0851

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-07-2006

| Document brevet cité au rapport de recherche | | Date de publication | Membre(s) de la famille de brevet(s) | | Date de publication |
|---|---|---|---|---|---|
| US 6346420 | B1 | 12-02-2002 | EP<br>FR | 1031829 A1<br>2790316 A1 | 30-08-2000<br>01-09-2000 |
| EP 1457771 | A | 15-09-2004 | US | 2004181377 A1 | 16-09-2004 |
| JP 2004293541 | A | 21-10-2004 | AUCUN | | |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040228786 A

- US 6258978 B

**Littérature non-brevet citée dans la description**

- **ALBAHRI, T.A.** Flammability Characteristics of Pure Hydrocarbons. *Chemical Engineering Science,* 2003, vol. 58, 3629-3641
- **SUZUKI, T.** Empirical Relationship between Lower Flammability Limits and Standard Enthalpies of Combustion of Organic Compounds. *Fire and Materials,* 1994, vol. 18, 333-336
- **HSHIEH, F.-Y.** Predicting Heat of Combustion and Lower Flammability Limits of Organosilicon Compounds. *Fire and Materials,* 1999, vol. 23, 79-89
- **HSHIEH, F.-Y. ; HIRSCH, D.B. ; BEESON, H.D.** Using Heat of Combustion Data to Estimate or Asses some Threshold Flammability Properties of Materials. *Fire and Materials,* 2003, vol. 27, 267-273

- **DALMAZZONE, D. ; LAFOREST, J.C. ; PETIT, J.M.** Application of Thermochemical Energy Hazard Criteria to the Prediction of Lower Flammability Limits of Hydrocarbons in Air. *Oil & Gas Science and Technology,* 2001, vol. 56 (4), 365-372
- **KONDO, S. ; URANO, Y. ; TOKUHASHI, K. ; TAKAHASHI, A. ; TANAKA, K.** Prediction of Flammability of Gases by Using F-number Analysis. *Journal of Hazardous Materials,* 2001, vol. A82, 113-128
- **EGERTON, A.C.** *4th Symposium on Combustion,* 1953, 4
- **ZABETAKIS, M.G. ; LAMBIRIS, S. ; SCOTT, G.S.** Flame Temperatures of Limit Mixtures. *7th International Symposium on Combustion,* 1959, 484-487